# DEMANDE DE BREVET EUROPEEN

(11) **EP 3 407 530 A1**
(43) Date de publication de la demande: **28.11.2018**
(21) Numéro de dépôt: 18162785.2
(22) Date de dépôt: 20.03.2018
(51) Int. Cl.: H04L 9/00, G09C 1/00

(54) **DISPOSITIF LOGIQUE DE DÉTECTION DE FAUTES**

(30) Priorité: 24.05.2017 FR 1754607
(71) Demandeur: STMICROELECTRONICS (ROUSSET) SAS, 13790 Rousset (FR)
(72) Inventeur: SARAFIANOS, Alexandre, 83910 Pourrieres (FR); ORDAS, Thomas, 83470 Pourcieux (FR)
(74) Mandataire: Cabinet Beaumont

(57) **Abrégé**

L'invention concerne un dispositif de détection de fautes comprenant un registre à décalage (2) adapté à décaler, au rythme d'une horloge, un signal binaire alternant entre deux niveaux logiques, dans des cellules successives du registre à décalage ; et un premier circuit logique (4) adapté à comparer des valeurs contenues dans au moins un couple de cellules du registre (2).

## Description

### Domaine

La présente demande concerne les puces électroniques, plus particulièrement des puces électroniques protégées contre l'injection de fautes.

### Exposé de l'art antérieur

Des puces électroniques contenant des informations confidentielles, telles que des puces de cartes bancaires, sont susceptibles de subir des attaques visant à déterminer le fonctionnement de la puce et à en extraire les informations confidentielles.

Un procédé courant pour pirater des informations manipulées par des circuits intégrés consiste à détecter les zones du circuit qui sont utilisées pendant le traitement de ces informations. Pour cela, le circuit intégré est activé ou placé dans un environnement fonctionnel et des données sont introduites en entrée. Pendant que les données sont traitées, des défauts, ou fautes, sont injectés dans le circuit par exemple par un laser, par un signal électromagnétique ou par application locale de tensions élevées. Une analyse des sorties du circuit permet de déterminer les zones du circuit qui traitent les données. Après avoir localisé ces zones, le pirate peut concentrer ses attaques sur ces zones afin de déterminer les données confidentielles qui sont traitées.

Si une telle attaque est détectée, une contre-mesure peut être déclenchée. Cette contre-mesure est par exemple l'effacement des informations confidentielles, la remise à zéro du circuit et/ou l'incrémentation d'un compteur, permettant de rendre le circuit intégré définitivement inactif une fois qu'un certain nombre de fautes ont été détectées.

Il serait souhaitable de prévoir une puce pouvant détecter ces types d'attaques.

### Résumé

Ainsi, un mode de réalisation prévoit un dispositif de détection de fautes comprenant un registre à décalage adapté à décaler, au rythme d'une horloge, un signal binaire alternant entre deux niveaux logiques, dans des cellules successives du registre à décalage ; et un premier circuit logique adapté à comparer des valeurs contenues dans au moins un couple de cellules du registre.

Selon un mode de réalisation, le premier circuit logique est adapté à comparer les valeurs contenues dans trois cellules successives connectées à des première, deuxième et troisième entrées et est adapté à comparer une valeur reçue en première entrée avec une valeur reçue en deuxième entrée, et à comparer une valeur reçue en deuxième entrée avec une valeur reçue en troisième entrée.

Selon un mode de réalisation, une dernière des cellules successives du registre est connectée à la troisième entrée du premier circuit logique, une avant-dernière cellule du registre est connectée à la deuxième entrée du premier circuit logique et une antépénultième cellule du registre est connectée à la première entrée du premier circuit logique.

Selon un mode de réalisation, le premier circuit logique comprend deux portes OU Exclusif, l'une ayant des entrées constituant les première et deuxième entrées du circuit logique et l'autre ayant une entrée connectée à la deuxième entrée du circuit logique et une entrée constituant la troisième entrée du circuit logique ; et un deuxième circuit logique adapté à fournir une première valeur si les sorties des deux portes OU Exclusif ont une valeur égale à un niveau logique bas et une seconde valeur dans les autres cas.

Selon un mode de réalisation, le second circuit logique comprend deux inverseurs, chacun ayant une entrée connectée à la sortie d'une des portes OU Exclusif ; et une porte OU dont les entrées sont connectées aux sorties des deux inverseurs, la sortie de la porte OU correspondant à la sortie du premier circuit logique.

Selon un mode de réalisation, le second circuit logique comprend une porte ET dont les entrées sont connectées aux sorties des portes OU Exclusif, la sortie de la porte ET correspondant à la sortie (12) du premier circuit logique.

Selon un mode de réalisation, le registre à décalage est composé de bascules de type D connectées à un même premier signal d'horloge, une sortie de chaque bascule autre qu'une dernière bascule du registre étant connectée à l'entrée D de la bascule suivante.

Selon un mode de réalisation, une sortie complémentaire d'une première bascule du registre est connectée à son entrée D.

Selon un mode de réalisation, l'entrée D d'une première bascule du registre est connectée à un second signal d'horloge de fréquence égale à la moitié de celle du premier signal d'horloge.

Selon un mode de réalisation, la fréquence du premier signal d'horloge est comprise entre 50 et 100 MHz.

Selon un mode de réalisation, le registre à décalage est un registre en anneau.

Un mode de réalisation prévoit une puce électronique comprenant une pluralité de dispositifs de détection de fautes tels que ci-dessus.

Selon un mode de réalisation, les dispositifs de détection de fautes occupent entre 3 et 10 % de la surface de la puce.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre schématiquement un mode de réalisation d'un dispositif logique de détection de fautes ;
la figure 2 illustre un exemple de registre ;
la figure 3 illustre un exemple d'un comparateur utilisé dans le dispositif de la figure 1 ;
la figure 4 illustre un autre exemple d'un comparateur utilisé dans le dispositif de la figure 1 ; et
la figure 5 représente un exemple de placement du dispositif de la figure 1 sur une puce.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés.

Sauf précision contraire, les expressions "approximativement" et "de l'ordre de" signifient à 10 % près, de préférence à 5 % près.

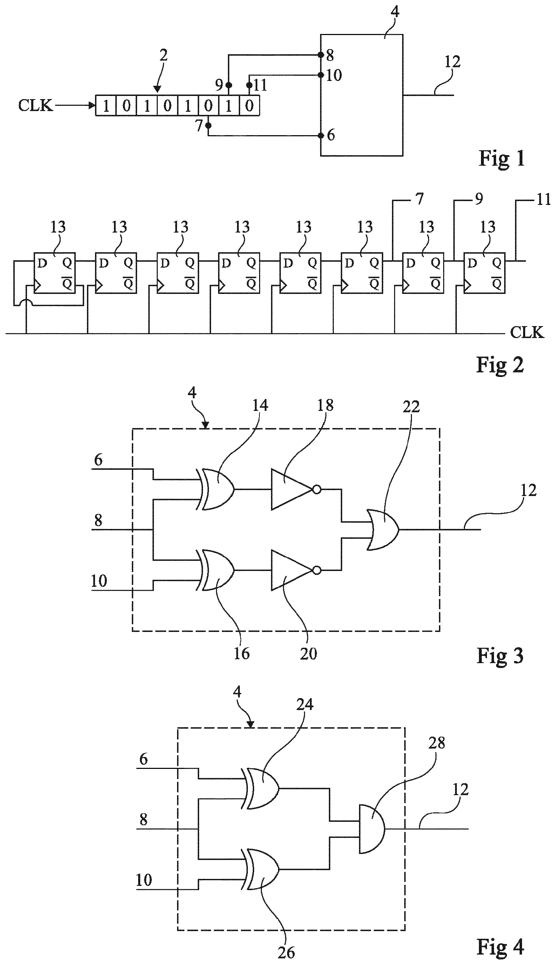

La figure 1 illustre schématiquement un mode de réalisation d'un dispositif logique de détection de fautes. Le dispositif comprend un registre à décalage 2 et un circuit logique de comparaison 4.

L'exemple de registre à décalage 2 illustré en figure 1, et décrit plus en détail par la suite en relation avec la figure 2, comprend 8 cellules. Le registre 2 comprend couramment 8, 16, 32 ou 64 cellules. Les cellules du registre à décalage 2 contiennent des bits dont les valeurs alternent entre un niveau logique bas "0" et un niveau logique haut "1". Le registre 2 est associé à un signal d'horloge CLK.

Au rythme du signal CLK, par exemple à chaque front montant, la valeur contenue dans chaque cellule est décalée dans la cellule suivante, le contenu de la première cellule prenant, à chaque coup d'horloge, la valeur opposée de sa valeur précédente.

A l'instant illustré par la figure 1, les valeurs contenues dans les cellules du registre 2 sont "10101010". Au front montant suivant du signal d'horloge, les valeurs contenues dans les cellules du registre deviennent "01010101".

Le circuit 4 est un circuit logique de comparaison adapté à vérifier que des cellules successives du registre 2 contiennent bien des valeurs alternées et n'ont pas été modifiées par une injection de fautes.

Dans l'exemple de la figure 1, le circuit 4 a trois entrées 6, 8 et 10 reliés à des sorties respectives 7, 9 et 11 du registre, et une sortie 12. Le circuit 4 compare les valeurs des entrées 6 et 8 d'une part, et des entrées 8 et 10 d'autre part. Les entrées du circuit 4 sont connectées aux sorties des trois dernières cellules du registre 2. Plus précisément, l'entrée 10 est connectée à la sortie 11 de la dernière cellule du registre, l'entrée 8 à la sortie 9 de l'avant-dernière cellule et l'entrée 6 à la sortie 7 de l'antépénultième cellule.

La valeur de la sortie 12 du circuit 4 est égale à une première valeur, par exemple 0, si les valeurs contenues dans les trois dernières cellules alternent entre les valeurs 0 et 1, c'est-à-dire si les valeurs contenues dans ces trois cellules sont "1, 0, 1" ou "0, 1, 0".

Lors d'une attaque telle que celle décrite précédemment, des fautes sont injectées, et les valeurs d'une ou plusieurs cellules du registre peuvent alors être modifiées. Les valeurs contenues dans plusieurs cellules successives sont donc identiques. Comme le registre décale constamment les valeurs contenues dans ses cellules, les fautes atteignent les entrées du circuit 4. La valeur de la sortie 12 du circuit 4 prend alors une seconde valeur, par exemple 1.

Par exemple, si les valeurs contenues dans les cellules du registre sont celles illustrées par la figure 1, une insertion de fautes peut changer la valeur contenue dans la troisième cellule de 1 en 0. Les valeurs contenues dans les cellules du registre sont donc "10001010". Après trois fronts montant de l'horloge CLK, les valeurs contenues dans les cellules du registre ont été décalées et sont alors "01010001". Les entrées 6, 8 et 10 du circuit 4 sont donc respectivement 0, 0 et 1. Deux valeurs successives sont égales. La sortie du circuit 4 prend la seconde valeur, signifiant la détection d'une faute.

La fréquence du signal d'horloge CLK est de préférence la fréquence la plus élevée possible compatible avec le système dans lequel est inséré le dispositif de sélection de fautes décrit ici. Cette fréquence est par exemple comprise entre 50 et 100 MHz. Ainsi, une faute dans le registre atteint très rapidement les cellules du registre dont les valeurs sont envoyées au circuit 4.

A titre de variante, le circuit de comparaison 4 peut comparer un nombre différent de valeurs contenues dans des cellules du registre 2. Par exemple, le circuit peut ne comparer que les valeurs contenues dans les deux dernières cellules du registre.

A titre de variante, le circuit 4 peut comparer la valeur contenue dans la dernière cellule avec la valeur de n'importe quelle autre cellule du registre. Par exemple, dans le cas d'un registre à huit cellules, le circuit 4 peut comparer la valeur contenue dans la huitième et dernière cellule avec la valeur contenue dans la troisième cellule, qui doit être différente, ou avec la valeur contenue dans la deuxième cellule, qui doit être identique.

Augmenter le nombre de couples de valeurs à comparer à un instant donné rend la détection de fautes plus rapide, mais le dispositif occupe alors une surface plus importante.

A titre de variante, le registre à décalage peut être un registre en anneau ayant été initialisé de telle manière que chaque cellule contienne une valeur différente des valeurs contenues dans la cellule précédente et dans la cellule suivante. A chaque coup de l'horloge CLK, les valeurs contenues dans les cellules du registre se décalent d'une cellule, la valeur contenue dans la dernière cellule étant décalée vers la première cellule.

Dans le cas d'un registre en anneau, les cellules connectées en entrée du circuit 4 peuvent ne pas être les dernières du registre et peuvent se situer à n'importe quel niveau du registre. Par exemple, dans le cas d'un registre à huit cellules, les trois cellules connectées à l'entrée du circuit 4 peuvent être des deuxième, troisième et quatrième cellules.

La figure 2 illustre un exemple de registre 2 à huit cellules formé par huit bascules 13 de type D.

Chaque bascule 13 a deux entrées, une entrée D recevant une donnée sous la forme d'un signal binaire et une entrée recevant un signal d'horloge CLK. Une bascule 13 a aussi deux sorties binaires complémentaires *Q* et *Q̅*. A chaque front montant du signal d'horloge, la sortie *Q* prend la valeur de l'entrée D et la valeur de la sortie *Q̅* prend la valeur complémentaire de la valeur de l'entrée D.

Le registre 2 est formé de huit bascules 13 connectées à un même signal d'horloge CLK. L'entrée D de chaque bascule 13 est connectée à la sortie *Q* de la bascule précédente, à l'exception de la première bascule dont l'entrée D est connectée à sa sortie *Q̅*. Les valeurs de la sortie *Q* de la première bascule 13 alternent entre 0 et 1 à chaque front montant du signal d'horloge.

Dans l'exemple de la figure 2, les sorties *Q* des trois dernières bascules du registre constituent les sorties 7, 9 et 11 du registre.

A titre de variante, l'entrée D de la première bascule peut recevoir un signal d'horloge dont la fréquence est la moitié de la fréquence du signal d'horloge CLK.

La figure 3 illustre un exemple de circuit 4 ayant des entrées 6, 8 et 10 et une sortie 12.

Le circuit 4 comprend ici deux portes OU Exclusif, ou XOR 14 et 16. Les entrées de la porte XOR 14 correspondent aux entrées 6 et 8 du circuit 4 et les entrées de la porte XOR 16 correspondent aux entrées 8 et 10 du circuit 4. La sortie de chaque porte XOR 14 et 16 est connectée à l'entrée d'un inverseur. Plus précisément, la sortie de la porte 14 est connectée à l'entrée de l'inverseur 18 et la sortie de la porte 16 est connectée à l'entrée de l'inverseur 20. Les sorties des deux inverseurs 18 et 20 sont connectées aux entrées d'une porte OU 22. La sortie de la porte OU 22 constitue la sortie 12 du circuit 4.

La sortie 12 du circuit 4 vaut 0 si les entrées 6, 8 et 10 valent "0, 1, 0" ou " 1, 0, 1" et vaut 1 dans les autres cas. La valeur 1 en sortie du circuit 4 correspond à la détection d'une faute.

La figure 4 illustre un autre exemple de circuit 4 ayant des entrées 6, 8 et 10 et une sortie 12.

Le circuit 4 comprend ici deux portes OU Exclusif 24 et 26, ou XOR. Les entrées de la porte XOR 24 correspondent aux entrées 6 et 8 du circuit 4 et les entrées de la porte XOR 26 correspondent aux entrées 8 et 10 du circuit 4. Les sorties des portes XOR 24 et 26 sont connectées aux entrées d'une porte ET 28. La sortie de la porte ET 28 constitue la sortie 12 du circuit 4.

La sortie 12 du circuit 4 vaut 1 si les entrées 6, 8 et 10 valent "0, 1, 0" ou " 1, 0, 1" et vaut 0 dans les autres cas. La valeur 0 en sortie du circuit 4 correspond à la détection d'une faute.

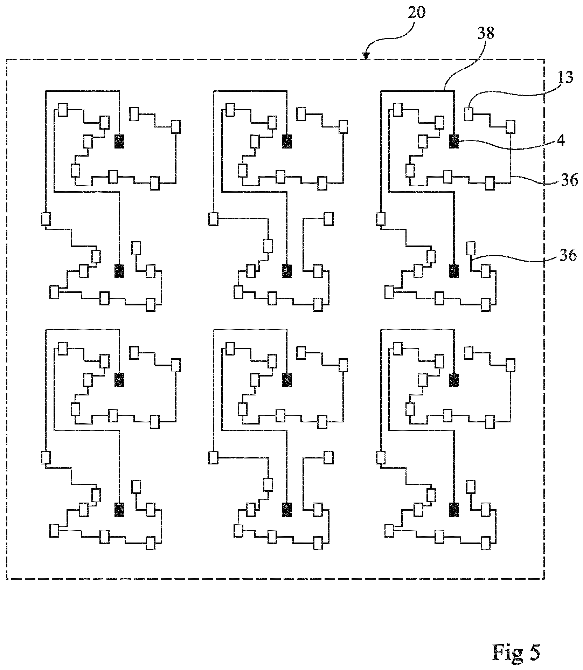

La figure 5 représente une portion 20 d'une puce composée d'une multitude de blocs de composants logiques non représentés. Des dispositifs de détection des fautes tels que celui décrit en relation avec la figure 1 sont insérés entre ces blocs de composants logiques. Six structures identiques comprenant chacune deux dispositifs de détection de fautes sont représentées.

Chaque dispositif comprend un circuit logique 4, représenté par un rectangle foncé, et un registre à huit cellules, chaque cellule étant représentée par un rectangle clair. Par exemple, chaque cellule est une bascule 13 de type D. Plus précisément, chaque bascule 13 et chaque circuit 4 est composé de plusieurs transistors formés dans la portion 20.

Chaque circuit 4 et les bascules 13 correspondantes sont connectés par une connexion 36. Les bascules 13 sont reliées en série par les connexions 36. Les connexions du circuit 4 aux sorties des trois bascules 13 successives ne sont représentées qu'en partie. Plus précisément, seule la connexion 38 entre le circuit 4 et la dernière cellule du registre est représentée.

Divers autres composants, non représentés, sont formés autour des dispositifs de détection de fautes. Les dispositifs de détection de fautes représentent par exemple entre 3 et 10 % de la surface de la puce, par exemple approximativement 5 %. Les dispositifs de détection de fautes sont repartis sur l'ensemble des zones logiques de la puce de telle manière que les attaques par injection de fautes puissent être repérées sur l'ensemble de la puce.

Augmenter le nombre de cellules dans le registre, c'est-à-dire le nombre de bascules, permet d'augmenter la surface protégée par un seul circuit.

Un avantage du dispositif de détection de fautes tel qu'il a été décrit ici est qu'il est entièrement numérique et facile à implémenter sur tout type de puce. De plus, un tel dispositif consomme peu d'énergie et est difficilement repérable.

Des modes de réalisation particuliers ont été décrits. Diverses variantes et modifications apparaîtront à l'homme de l'art. En particulier, le circuit 4 et le registre 2 ne sont pas limités aux exemples décrits en relation avec les figures 2, 3 et 4 et peuvent être remplacés par tout autre circuit et registre ayant les mêmes caractéristiques.

## Revendications

1. Dispositif de détection de fautes comprenant :
un registre à décalage (2) adapté à décaler, au rythme d'une horloge, un signal binaire alternant entre deux niveaux logiques dans des cellules successives du registre à décalage ; et
un premier circuit logique (4) adapté à comparer des valeurs contenues dans trois cellules successives connectées à des première (6), deuxième (8) et troisième (10) entrées et adapté à comparer une valeur reçue en première entrée (6) avec une valeur reçue en deuxième entrée (8), et à comparer une valeur reçue en deuxième entrée (8) avec une valeur reçue en troisième entrée (10) .

2. Dispositif de détection de fautes selon la revendication 1, dans lequel une dernière des cellules successives du registre (2) est connectée à la troisième entrée (10) du premier circuit logique (4), une avant-dernière cellule du registre (2) est connectée à la deuxième entrée (8) du premier circuit logique (4) et une antépénultième cellule du registre (2) est connectée à la première entrée (6) du premier circuit logique (4).

3. Dispositif de détection de fautes selon la revendication 2, dans lequel le premier circuit logique (4) comprend :
deux portes OU Exclusif, l'une (14 ; 24) ayant des entrées constituant les première (6) et deuxième (8) entrées du circuit logique (4) et l'autre (16 ; 26) ayant une entrée connectée à la deuxième (8) entrée du circuit logique (4) et une entrée constituant la troisième entrée (10) du circuit logique (4) ; et
un deuxième circuit logique adapté à fournir une première valeur si les sorties des deux portes OU Exclusif (14, 16 ; 24, 26) ont une valeur égale à un niveau logique bas et une seconde valeur dans les autres cas.

4. Dispositif de détection de fautes selon la revendication 3, dans lequel le second circuit logique comprend :
deux inverseurs (18, 20), chacun ayant une entrée connectée à la sortie d'une des portes OU Exclusif (14, 16) ; et
une porte OU (22) dont les entrées sont connectées aux sorties des deux inverseurs (18, 20), la sortie de la porte OU (22) correspondant à la sortie (12) du premier circuit logique (4) .

5. Dispositif de détection de fautes selon la revendication 3, dans lequel le second circuit logique (4) comprend une porte ET (28) dont les entrées sont connectées aux sorties des portes OU Exclusif (24, 26), la sortie de la porte ET (28) correspondant à la sortie (12) du premier circuit logique (4).

6. Dispositif de détection de fautes selon l'une quelconque des revendications 1 à 5, dans lequel le registre à décalage (2) est composé de bascules (13) de type D connectées à un même premier signal d'horloge (CLK), une sortie (Q) de chaque bascule (13) autre qu'une dernière bascule du registre étant connectée à l'entrée D de la bascule (13) suivante.

7. Dispositif de détection de fautes selon la revendication 6, dans lequel une sortie complémentaire (*Q̅*) d'une première bascule (13) du registre est connectée à son entrée D.

8. Dispositif de détection de fautes selon la revendication 6, dans lequel l'entrée D d'une première bascule (13) du registre est connectée à un second signal d'horloge de fréquence égale à la moitié de celle du premier signal d'horloge (CLK).

9. Dispositif de détection de fautes selon l'une quelconque des revendications 6 à 8, dans lequel la fréquence du premier signal d'horloge (CLK) est comprise entre 50 et 100 MHz.

10. Dispositif de détection de fautes selon l'une quelconque des revendications 1 à 9, dans lequel le registre à décalage (2) est un registre en anneau.

11. Puce électronique comprenant une pluralité de dispositifs de détection de fautes selon l'une quelconque des revendications 1 à 10.

12. Puce selon la revendication 11, dans laquelle les dispositifs de détection de fautes occupent entre 3 et 10 % de la surface de la puce.
